# EUROPEAN PATENT SPECIFICATION

(11) **EP 4 173 478 B1**
(45) Date of publication and mention of the grant of the patent: **26.02.2025**
(21) Application number: 22184560.5
(22) Date of filing: 12.07.2022
(51) Int. Cl.: A01K 1/00, A01K 1/01

(54) **STABLE COMPRISING A WASTE REMOVAL SYSTEM**
STALL MIT EINEM ABFALLENTFERNUNGSSYSTEM
ÉTABLE COMPRENANT UN SYSTÈME D'ÉLIMINATION DE DÉCHETS

(30) Priority: 12.07.2021 NL 2028707; 21.02.2022 NL 2031024
(43) Date of publication of application: 03.05.2023
(73) Proprietor: Insolute B.V., 3774 RD Kootwijkerbroek (NL)
(72) Inventor: van Beek, Geurt Gerardus, 3771 MK Barneveld (NL)
(74) Representative: Patent Business B.V.

(56) References cited:
- WO-A1-2006/058537
- WO-A1-2020/187804
- FR-A1- 2 848 065

## Description

### Field of the invention

The invention relates to animal husbandry and housing for animals. In particular, the invention relates to a stable, particularly a livestock stable for instance for calves, but also other livestock such as cattle and pigs.

### Background of the invention

A stable, particularly including a manure cellar below the walk-on floor of a livestock stable is generally known. Usually grids are provided over such manure cellars so that manure and urine can freely drain into the manure cellar. Such a grid is for instance known from NL2004490 and NL2004491.

It is known that in such a manure cellar a mixture of faeces and urine results in the development of ammonia. It particularly turned out that a contact time of 2 hours already results in considerable ammonia development.

EP2494864A1 of applicant relates to a stable comprising a manure storage, a walk-on floor provided with passages for manure and urine, and below the walk-on floor a bottom floor comprising a series of concrete floor parts and with a top surface at a fall, and a concrete discharge channel having side walls and a discharge channel bottom at a fall, wherein the series of floor parts with an edge connect to side walls of the discharge channel so that on either side of the discharge channel floor parts at a fall slope down to the discharge channel, wherein the fall of the discharge channel is transverse to the fall of the floor parts, wherein the discharge channel ends in a reservoir for a thin fraction of the manure that has been separated from the manure storage, wherein at a longitudinal side, transverse to the discharge channel, the bottom floor provides a passage for the solid fraction of the manure and its collection in the manure storage, and wherein the stable is furthermore provided with a manure scraper for shoving the manure over the floor parts towards the passage and into the manure storage.

NL2014138 discloses according to its abstract a stable having a manure cellar and a floor having passages for manure and urine. The manure cellar comprises drainage passages for removing air from the cellar. Pressure sensors are provided in the manure cellar and coupled to a control unit for activating a ventilator for keeping a pressure in the cellar higher or equal to a pressure determined by a further pressure sensor above the floor.

WO2010058384 according to its abstract discloses: "A ventilation duct system (1,24,34) and method serve for minimizing air pollution in and/or around an animal habitat structure (25,33,52) with at least one animal habitat surface (3). The ventilation duct system (1,24,34) is located at least partly below the at least one animal habitat surface (3) and comprises waste receiving means (2) configured for receiving waste (17,20,32) from and/or through at least a part of the at last one animal habitat surface (3). The ventilation duct system (1,24,34) provides an air pressure gradient across the width of the waste receiving means (2), which air pressure gradient is generated by a pressure difference between a first long side (10) and an opposing second long side (11) of the waste receiving means (2). The ammonia concentration is almost completely kept at floor level and in the slurry pits, and the breathing air in the room above the slatted floor is thus ventilated without admixing the unpleasant gases from the animals.".

FR2848065 according to its abstract discloses a "... gutter base (10), designed to go beneath a slatted floor and remove manure by a water-assisted gravity flow, consists of a core module (10c) of cast concrete with one or more channels (130) and at least one raised side (10a, 10b) for supporting the floor. Each core module is prefabricated in one piece with a smooth mould-hardened surface. The ends of the modules are laid on sole plates, and seals are fitted between all components that are in contact with the manure, which can be discharged by an automatic flushing system into a main drainage channel."

US2016/316712 according to its abstract discloses "A livestock barn is provided including a pit. A first portion of a pit floor slopes downward from a first side of the pit to a centerline of the pit and a second portion of the pit floor slopes downward from a second side of the pit to the centerline so that excrement on the first portion of the pit floor and excrement on the second portion of the pit floor is directed toward the centerline. The pit floor is sloped downward from a first end of the pit to a second end of the pit so that excrement on the centerline is directed from the first end to the second end."

WO2020/187804 of the applicant in its abstract relates "The invention provides stable comprising a walk-on floor provided with passages for waste, comprising manure and urine, a collecting floor below the walk-on floor with a top surface for receiving said waste, and a waste removal system, said waste removal system comprising a discharge channel, with the collecting floor connecting to the discharge channel, wherein said collecting floor and said discharge channel are liquid-closed and said waste removal system further comprises a waste drainage conduit in fluid coupling with said discharge channel, and wherein said waste drainage conduit comprises a waste transport device, in particular said waste transport system comprising a waste suction device for providing a reduced pressure in said waste drainage conduit."

### Summary of the invention

A disadvantage of prior art is that amongst others that it allows waste to contact air during a relatively long time, that it allows animals to contact the waste gasses, and it provides room for pests like rats and mice. Waste removal is often passive, for instance using gravity, or requiring water, thus resulting in polluted water. The construction can be simplified and modification of existing stables is required, in view of environmental requirements, including reduction of nitrogen compounds like ammonia.

Hence, it is an aspect of the invention to provide an alternative stable, which preferably further at least partly obviates one or more of above-described drawbacks.

The current invention thus relates to a stable as defined in claim 1.

There is further described a waste lock, and a method for removing waste.

Further embodiments are explained in the detailed description and the depending claims.

There is further described a waste drainage system for mainly liquid waste fraction, in particular urine, and for a stable comprising:
- a walk-on floor provided with passages for waste, comprising manure and urine;
- a collecting floor below the walk-on floor with a top surface for receiving said waste,
said waste drainage system comprising a continuous discharge channel extending in longitudinal direction and in particular having a width of 1.5 - 5 cm, with the collecting floor connecting to the discharge channel, and said waste removal system further comprises a waste drainage conduit running below said discharge channel and in fluid coupling with said discharge channel via a fluid coupling comprising a passage opening between a bottom of the discharge channel and below an opening of the discharge channel and into the waste drainage conduit and in particular having a longitudinal width of 1-20 cm, in particular 1.5-5 cm.

The current disclosure alternatively or in combination describes a stable comprising:
- a walk-on floor comprising passages for waste;
- a collecting floor below the walk-on floor for receiving said waste and comprising a series of floor parts, and
- a ventilation system,
wherein said ventilation system comprises a reduced pressure system coupled to a series of inlet openings positioned between said walk-on floor and said collecting floor and along said collecting floor for in operation causing a flow of air over said collecting floor to said inlet openings.

In an embodiment, the stable comprises both the waste removal system and the ventilation system.

In the current context, "reduced pressure" relates to a pressure that is below the current pressure in or about the stable or animal housing. Such a reduced pressure is to be sufficient for causing a flow of air towards said source or sources of reduced pressure. The flow of air is to cause a removal of undesired gasses but avoid draught to such an extent that is detrimental or unpleasant for the animals. Reduced pressure is sometimes also (although in pure physics sense incorrectly) referred to as vacuum. It should be clear that in the current description, it is in fact functional for taking away undesired compounds, usually in the form of gasses. These undesired compounds may also comprise particles and dust.

In an embodiment of the stable, the lock doors each closing off a passage opening. In an embodiment, the lock doors comprise a lock door actuator for opening said passage for allowing the solid waste fraction to pass the lock doors, said lock door actuator adapted for opening and keeping open the stable side lock door until the solid waste fraction passed the stable side lock door, then closing the stable side lock door, opening the waste container side lock door when the stable side lock door is closed, allowing the solid waste fraction to pass the waste container side lock door and be deposited by the waste displacer into the waste container, and closing the waste container side lock door when the solid waste fraction is deposited in the waste container.

In an embodiment, the lock door actuator is controlled through a control system, for opening and keeping open the stable side lock door until the solid waste fraction passed the stable side lock door.

In an embodiment of the stable, after closing the waste container side lock door after the solid waste fraction is deposited in the waste container, the actuator is further adapted for opening the stable side lock door and keep it open until the waste displacer passed the stable side lock door, and subsequently closing the stable side lock door.

There is furthermore described a waste-lock for providing a selective passage for a solid waste fraction mainly comprising manure, said waste-lock comprising a waste passage and a series of closures at the ends of the waste passage for each closing off a waste passage end and an actuator adapted for keeping one closure closed as the other closure opens, and only opening that one closure after the other closure is closed.

There is furthermore provided a method for removing waste from a collecting floor into a waste container in a stable of any one of the claims 1-3, the method comprising providing a waste-lock, displacing waste via the waste removal system to the waste-lock, opening a waste-lock closure closest to the waste being displaced, displacing the waste via the waste removal system into a waste passage, closing the opened waste-lock closure, opening the opposite waste-lock closure after the opened waste-lock closure is closed, depositing the waste via the waste removal system into the waste container, and closing the opened waste-lock closure.

In an embodiment, the waste removal system provides a largely closed circuit for waste, preventing emission of harmful compounds.

In the current context, the collecting floor and the discharge channel are as smooth as possible and are fluid-closed. The collecting floor and discharge channel can be made from liquid-prove concrete that is made smooth during production, or which is provided with a top layer or coating. Alternative, the collecting floor comprises or consists of a polymer material. Such a floor can be solid or may comprise ribs or reinforcement material, of even comprise a foam core.

The current ventilation system and waste removal system are designed to be easy to build. Furthermore, they can be used to modify existing stables and animal housings, for instance renovate and modernize these in order to meet new requirements on emission and animal well-being.

In the current description and claims, reference is made to waste. In the current animal husbandry context, waste includes manure and urine. This is also referred to as dung. This usually forms a slurry. In the current text, these words may be used alternatingly, but in general refer to the same. If required, the waste may be diluted with water in order to more easily remove the waste. In the current system, water for diluting the slurry to make it more easy for pumping or sucking it away can be provided from recycled water that is recovered from the waste at a later stage, for instance before or after a waste fermentation system.

The current ventilation system and waste removal system prevent negative and unwanted environmental effects of animal husbandry, in particular in cattle/cow and calve stables and for instance pig and goat stables.

In the current description, reference is made to a stable. In a more general sense, the current description relates to animal husbandry, in particular of livestock. The current ventilation system and current waste removal system can be incorporated into a livestock house.

In known stables and livestock houses, due to animal waste the concentration of waste gasses can be high, in particular so high that it becomes detrimental to animal and human health. Furthermore, air becomes polluted with dust and micro dust and even smaller particles. Therefore, the stable is provided with one or more sensors for measuring at least one selected from waste gases and particles. These sensors are thus provided for determining air quality. More in particular, one or more sensors are provided for detecting a level of at least one selected from waste gasses and particles. Waste gasses can comprise at least one selected from ammonia (NH₃), carbon dioxide (CO₂), hydrogen sulphide (H₂S), methane (CH₄), hydrogencyanide (HCN), ozone, and a combination thereof. Alternatively or in combination, a sensor can be provided to determine a level of desired gasses, like oxygen.

In an embodiment, the discharge channel has a depth of 5-15 cm. In particular, this depth is 10-13 cm. This prevents clogging.

In an embodiment, the said passage fans out of funnels our from said discharge channel out into said waste drainage conduit. In particular said passage fans out or funnels out starting about halfway a depth of said discharge channel. This prevents clogging further.

In an embodiment, the passage transversely intersects said discharge channel, and/or said passage, in particular providing a slit having a or said longitudinal width of 1-20 cm. In particular the slit is 1.5-5 cm.

In an embodiment, the waste drainage system comprises a top part and bottom part, said top part at least mainly comprising said discharge channel and said bottom part at least mainly comprising said waste drainage conduit. In particular an upper side of said bottom part comprising said waste drainage conduit and a lower and of said top part providing an upper closure of said waste drainage conduit. This makes it easy to produce, for instance from concrete.

In an embodiment, the waste drainage system comprises a support surface extending in said longitudinal direction for supporting sides of said collecting floor, to allow said liquid fraction to flow from said sides of said collecting floor and into said discharge channel.

In an embodiment, the waste drainage system comprises a plurality of said fluid couplings. In particular these are disposed at a longitudinal interspacing of 1-10 meter. More in particular interspaced 1.5-2.5 meter. More in particular regularly interspaced.

In an embodiment, the discharge channel, waste drainage conduit and fluid couplings are provided in parts from a hardening moulded material, for instance selected from a top part and a bottom part as mentioned earlier, a single moulded part, and a combination thereof. In particular the hardening moulding material comprises concrete.

There is further described a stable comprising:
- a walk-on floor provided with passages for waste, comprising manure and urine;
- a collecting floor below the walk-on floor with a top surface for receiving said waste, and
- a waste removal system comprising the waste drainage system described above.

In an embodiment, the ventilation system can be functionally coupled with, or provided with, an air-treatment device. Examples of air-treatment devices are a biofilter, an air washer, an electrostatic particle filter.

Embodiments of a walk-on floor that allows waste to pass is a slatted floor. A suitable slatted floor and animal-friendly embodiments thereof are for instance described in NL2004490 and NL2004491 of current applicant and which are cited in this description

In an embodiment, the waste removal system further comprising a waste scraper for displacing the waste from the collecting floor into the discharge channel. In an embodiment, the waste scraper is furthermore provided for displacing the waste into and through the discharge channel and into the waste drainage conduit. In an embodiment, said waste scraper comprises a scraper lip adapted to a cross section of said discharge channel for displacing waste in said discharge channel.

In an embodiment, collecting floor is at a slope and comprising a series of floor parts, and said collecting floor connecting to the discharge channel with on either side of said discharge channel with said floor parts sloping down to said discharge channel at said slope. In particular for the waste removal system, this facilitates removal of the waste.

In an embodiment, the collecting floor comprises floor parts on either side of said discharge channel and connecting to said discharge channel.

In an embodiment, the waste drainage conduit is provided below said collecting floor.

In an embodiment, the waste drainage conduit is provided between said walk-on floor and said collecting floor.

In an embodiment, the waste removal system further comprising a flush device for flushing waste through said discharge channel and into said waste drainage conduit. In an embodiment, the said flush device comprising a waste flush conduit extending along a length of the collecting floor. In an embodiment, the waste flush conduit comprises a series of spray nozzles directed towards the collecting floor and positioned along the waste flush conduit.

In an embodiment, the waste drainage conduit is parallel to said discharge channel. In an embodiment, the waste drainage conduit is parallel and below said discharge channel. In an embodiment, the waste drainage conduit comprises at least one passage fluid coupling said waste drainage conduit and said discharge channel.

In an embodiment, the inlet openings of the ventilation system are positioned above said collecting floor. In an embodiment, the inlet openings are between 10 and 30 cm above said collecting floor.

In an embodiment, the ventilation system comprises a ventilation conduit between said walk-on floor and said collecting floor and extending along a side of said collecting floor, said ventilation conduit comprising said inlet openings.

In an embodiment, the ventilation system further comprising a space below said collecting floor, said space fluidly coupled to said inlet openings, and said space fluidly coupled to said reduced pressure system for in operation reducing a pressure in said space.

In an embodiment, the stable with said waste removal system and said ventilation system further comprises a profile section comprising attachment ends for attaching said profile section to a wall and defining an attachment plane, said profile section comprising a collecting floor edge receiving part for receiving a collecting floor edge and holding said collecting floor fixed to said wall with its edge at a distance from said attachment plane, said profile section providing a first and second attachment end with said collecting floor edge receiving part between said first and second attachment end, said collecting floor edge receiving part providing a liquid-closed coupling, and said profile section comprising a series of said inlet openings providing air passages cross with respect to a longitudinal direction of said profile section and passing between said collecting floor edge and said attachment plane.

The profile section in an embodiment provides an air passage to below the collecting floor.

In an embodiment, the profile section comprises a sloping wall from its upper attachment end sloping away from the wall, and at its lower end comprising a wall running substantially parallel to the collecting floor and provided with air openings providing the air openings.

In an embodiment, the stable further comprising a control system that is functionally coupled to at least one selected from said ventilation system and said waste removal system.

In an embodiment, the stable further comprises air quality determination or measuring means, here a series of sensors at animal level. In an embodiment these are at a height of between 0,5 and 3 meter, for sensing at a concentration level of least one selected from carbondioxide, methane, hydrogensulfide, hydrogencyanide (HCN), ozone and a combination thereof, said sensors functionally coupled with said control system, and said control system adapted for activating or changing operation of at least one selected from said ventilation system and said waste removal system depending on said sensed concentration level. For instance, the waste scraper can be activated when levels of ammonia rise. The controller may also increase the flow of the ventilation system when the waste scraper is in motion.

The present disclosure further relates to a stable comprising:
- a walk-on floor provided with passages for waste, comprising manure and urine;
- a collecting floor below the walk-on floor with a top surface for receiving said waste, and
- a waste removal system, said waste transport system comprising a waste suction device for providing a reduced pressure for removing waste from said collecting floor.

The present disclosure further relates to a stable comprising:
- a walk-on floor provided with passages for waste, comprising manure and urine;
- a collecting floor below the walk-on floor with a top surface for receiving said waste, and
- a waste removal system,
said waste removal system comprising a waste transport device comprising a waste suction device for providing a reduced pressure in said waste drainage conduit.

This stable can further comprise a combination of features described in this application. In an embodiment, this stable further comprises a ventilation system as described. In an embodiment, the suction device can be used for removing waste and for driving the ventilation system.

The present disclosure further relates to a stable comprising:
- a walk-on floor provided with passages for waste, said waste comprising manure and urine;
- a collecting floor below the walk-on floor with a top surface for receiving said waste,
wherein said collecting floor is liquid-closed and said stable further comprises a waste drainage conduit and wherein said waste drainage conduit comprises a waste suction device for providing a reduced pressure in said waste drainage conduit.

In particular, the waste drainage conduit extends along a length of said collecting floor or in operation is extendable along said collecting floor. The waste drainage conduit comprises one of more suction openings positioned or positionable for sucking waste from said collecting floor.

The present disclosure further relates to a stable comprising:
a control system operationally coupled to
   - one or more sensors for determining air quality, in particular for detecting a level of gases like ammonia (NH3), carbon dioxide (CO2), hydrogen sulphide (H2S), methane (CH4), hydrogen cyanide (HCN), ozone, and a combination thereof, and
   - a waste removal system;
   - a ventilation system,
wherein said control system based on a level detected by the one or more sensors, activates at least one of the ventilation system and the waste removal system.

Alternatively or in combination, a sensor can be provided to determine a level of desired gasses, like oxygen. The sensor con also be suited for detection of levels of particles and dust.

In an embodiment, the control system modifies a flow rate of the ventilation system and/or of the waste removal system depending on a sensed level.

In an embodiment, the control system is operationally coupled to a feedback system, for providing sensory feedback to an operator, for instance a farmer, on air and/of waste conditions in said stable. In an embodiment, the feedback system comprises a display for displaying information on ant least one selected from sensor output, ventilation system condition, waste condition.

All the embodiments above seek to reduce the levels of gases and vapours from a stable. Important gasses that need to be lowered are ammonia, and for instance fine dust requires reduction. Furthermore, these features improv ease of handling components like manure and urine. These features for instance allow automated handling, transport and/or processing or these components.

The control system is further functionally coupled to the waste flush conduit. For instance depending on the position of the waste scraper, the control system can activate past of the flush conduit of part or selected spray nozzles of the waste flush conduit.

The terms "upstream" and "downstream" relate to an arrangement of items or features relative to the propagation of the air from high pressure region to a low pressure region. In this relation, "upstream" is relates to going from a low pressure region to a high pressure region, opposite the flow of air.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The various aspects discussed in this patent application can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts a part of a stable floor, showing a slatted floor that is partly removed, and having the bottom floor partly removed;
Figure 2 a top view of figure 1;
Figure 3 a cross section as indicated in figure 2;
Figure 4 a detail of the waste drainage conduit and its fluid coupling to a discharge channel;
Figure 5 a detail of the discharge channel with an opening in its bottom for fluid coupling to a waste drainage conduit;
Figure 6 a detail of a collecting floor coupling profile with ventilation inlet opening;
Figure 7 a stable with an additional or alternative waste removal system;
Figures 8-10 Various views and cross sections of a waste drainage system;
Figures 11A-11E the operation of a waste lock.

The drawings are not necessarily on scale.

### Description of preferred embodiments

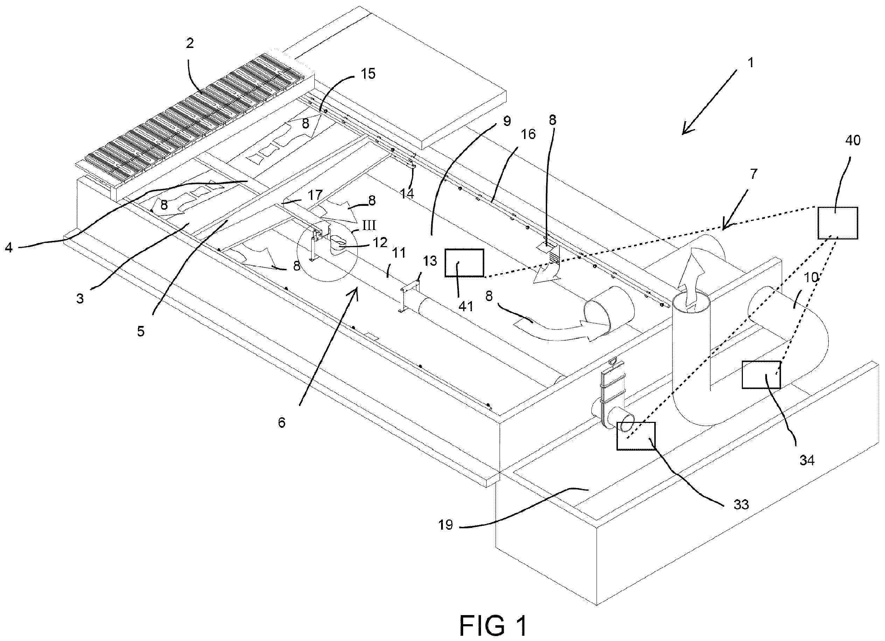

Figure 1 schematically depicts a 3D view of part of a stable 1. In particular, in figure 1 part of a stable floor is depicted, where most part of a walk-on floor 2 is removed. Figure 1 shows the current ventilation system 7 and the current waste-removal system 6. These two systems each provide advantages, and when implemented together these two systems reduce emission and prevent pests in the stable 1. The depicted embodiment has collecting floor 3 below the walk-on floor 2. This collecting floor 3 is liquid closed. In an embodiment with the ventilation system, the collecting floor 3 is furthermore substantially air closed. The collecting floor 3 in the depicted embodiment furthermore comprise a discharge channel 4, in particular an open gutter.

The collecting floor 3 is provided for receiving waste that falls through the walk-on floor 2. The walk-on floor 2 has openings for allowing waste to fall onto the collecting floor 3. In the depicted embodiment, it is a slatted floor, that is largely removed for showing the further construction.

The depicted embodiment is further provided with a waste displacer for the solid waste fraction. In an embodiment, that waste displacer comprises a waste scraper 5, also called a dung slider^{®}. Waste that drops onto the collecting floor 3 is removed quickly by the waste scraper 5 into a further closed system in order to prevent emission. In the depicted embodiment, the collecting floor 3 is at a slope, sloping towards a discharge channel 4. The waste scraper 5 in use moves back and forth over the collecting floor. In this way, the waste is displaced. In the depicted embodiment, the waste is displaced to and into the displacement channel 4. The displacement to the discharge channel is a first concentrating step.

In an embodiment, the upper surface of the collecting floor 3 is relatively smooth in order to facilitate displacement of the waste. Furthermore, the collecting floor 3 is liquid-closed. In an embodiment, coupling of the collecting floor 3 to the further stable construction is liquid-closed in order to prevent waste from polluting the stable.

The waste scraper 5 has a lower edge contacting the collecting floor 3 in order to ensure, in operation, that the waste is properly displaced and removed from the collecting floor 3.

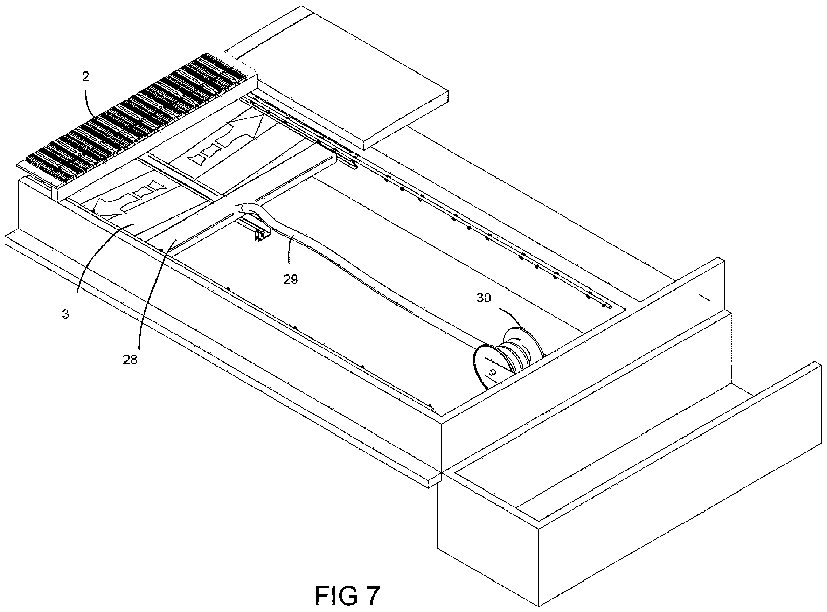

The liquid fraction of the waste, mainly urine in the waste removal system 6 is introduced in a closed waste drainage conduit 11. In figure 1, the waste drainage conduit 11 is provided below the collecting floor 3. The waste drainage conduit 11 can also be provided below the walk-on floor and above the collecting floor. In figure 7, an alternative embodiment is depicted, where a waste drainage conduit 25 is positioned between the walk-on floor 2 and the collecting floor 3. That embodiment will be discussed further below.

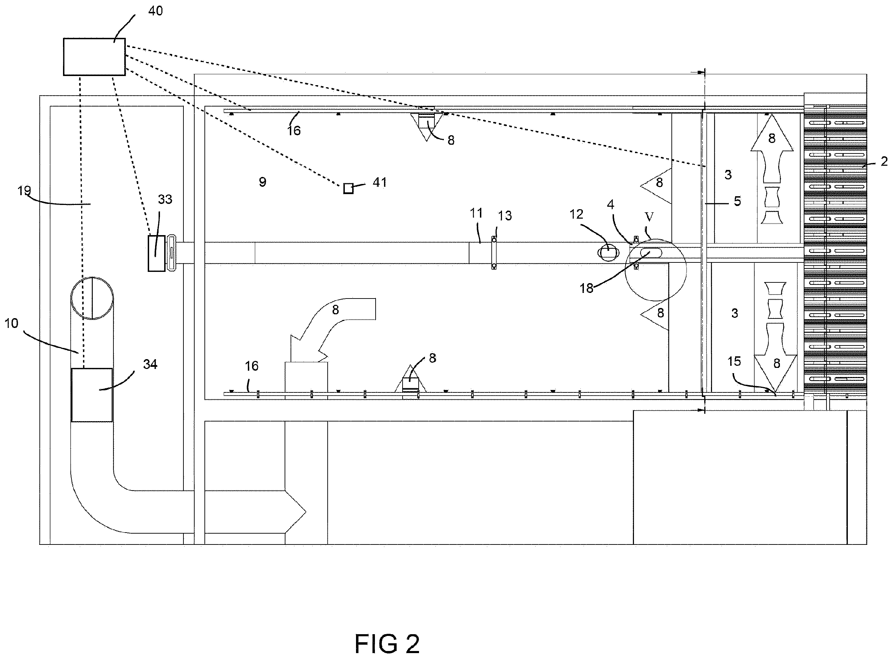

The waste removal system 6 further comprises a waste transport device 33, schematically indicated in figure 2. Such a waste transport device may comprise a mechanical transport device like a worm screw. In the current embodiment, the waste transport device comprises a suction device for applying a reduced pressure inside the waste drainage conduit 11. An advantage of such a reduced pressure suction device is that emission is also removed.

In the embodiment of figures 1-3, The waste scraper 5 is provided for displacing the solid waste fraction to and into the discharge channel 4. In order to facilitate displacement of the waste, the waste removal system can be provided with a waste flush device that sprays liquid, largely water, onto the collecting floor 3. With the collecting floor 3 at a slope and sloping towards a (central) discharge channel 4, a relatively small amount of water is needed. Furthermore, in the current embodiment a waste flush conduit 16 is provided that extends along the collecting floor 3. The waste flush conduit is in the current embodiment provided with a series of spray nozzles along the length of the collecting floor 3. In an embodiment, in order to save water, each time a nozzle that is just in front of the waste scraper 5 is activated. The water used can be recycled water from a waste treatment system that is coupled to the waste removal system 6. An example of a waste treatment system is a biodigester, for instance producing natural gas from waste.

In known stables, a space below the collecting floor is used as a waste cellar. In the current application, the waste is removes via the collecting floor by means of a waste scraper to the discharge channel and from the discharge channel via the waste drainage conduit out of the stable via a closed conduit.

The stable further comprises a ventilation system comprising a reduced pressure system coupled to a series of inlet openings positioned along and above the collecting floor. The flow of air is indicated with reference number 8. The inlet openings cause a flow of air over the collecting floor. In this way, emission from the waste on the collecting floor is directly guided away from the stable and from the animals.

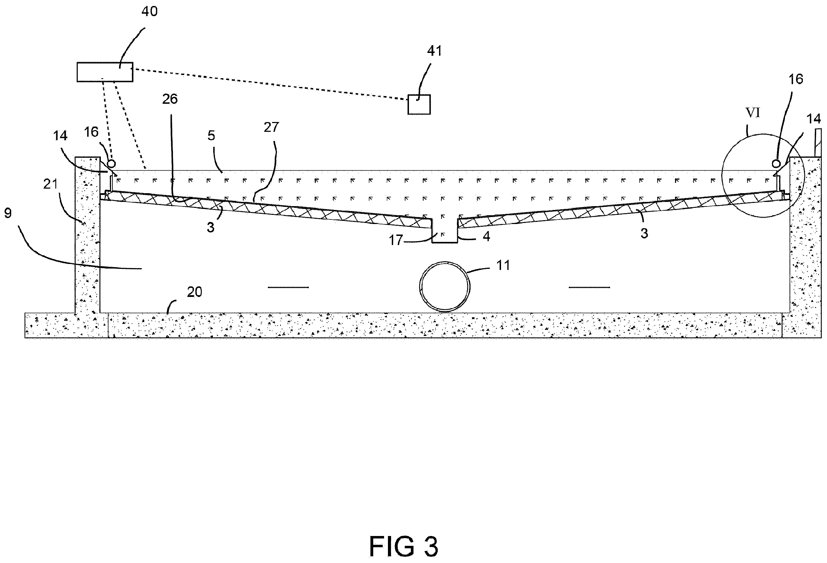

In the embodiment of figures 1-3, a space or cellar 9 is provided below the collecting floor 3. This space 9 had a bottom 20 and side walls 21. In figure 3 is depicted how the waste drainage conduit 11 is provided below the collecting floor 3. The side walls 21 are here provided with attachment profiles 14 extending along the length of the space 9 for holding the collecting floor 3 and providing inlet openings and thus forming part of the ventilation system in this embodiment.

In the current embodiment, as depicted in figures 1 and 2, the space or cellar 9 below the collecting floor 3 is in fluid communication with the space above the collecting floor via inlet openings. Furthermore, air conduit 10 fluidly couples the space or cellar 9 below the collecting floor 3 and a reduced pressure system for creating a reduced pressure in the space or cellar 9 below the collecting floor 3. Such a set-up provides a drought in the space or cellar 9 which can prevent pests like mice and rats from housing. In an alternative embodiment, air conduits are provided along a length of the collecting floor 3 that are provided with inlet openings and the air conduits are coupled with the reduced pressure system. In such an embodiment, a space 9 below the collecting floor 3 is not required. Again, the inlet openings are provided between the walk-on floor 2 and the collecting floor 3 in order to allow removal of emission from waste on the collecting floor 3 before removal of that waste via the waste removal system. In addition to inlet openings along opposite sides of the collecting floor, one or more further conduits with air inlet openings opening towards the collecting floor 3 may be provided between the walk-on floor 2 and the collecting floor 3.

In the current waste removal system for figures 1-3, universal frames 13 are provided for holding the discharge channel 4 and for holding the waste drainage conduit 11. This universal frame 13 can be placed on a floor, like the floor 20 of the space 9.

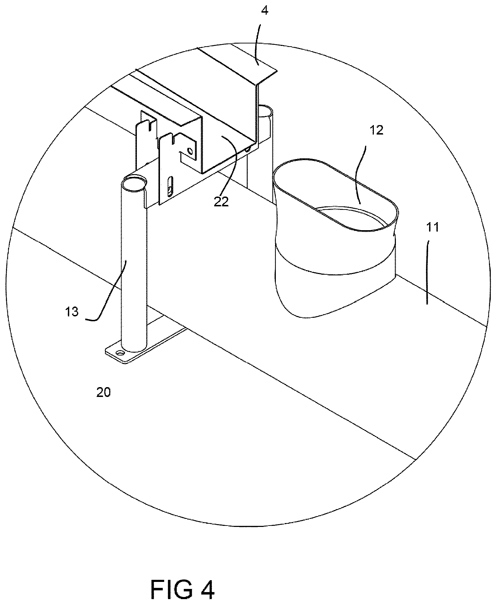

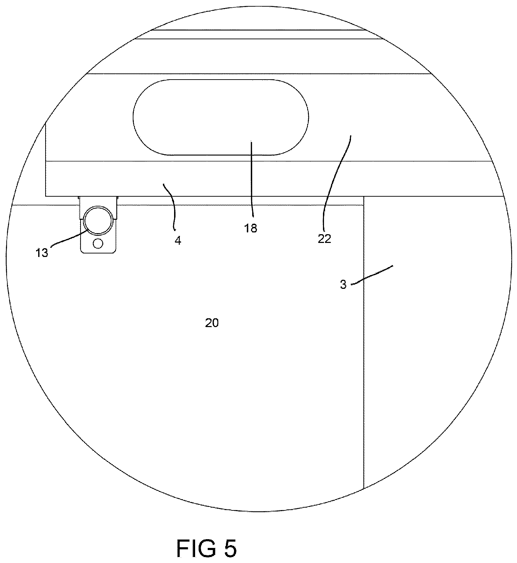

Figures 4 and 5 show an embodiment of a fluid coupling between the discharge channel 4 and the waste drainage conduit 11. In this embodiment, the waste drainage channel 11 comprises one or more fluid couplings 12. These couplings can be provided with a biased valve (not depicted). When the coupled waste suction system reduces the pressure in the waste drainage conduit 11, this opens the biased valve and sucks waste into the waste drainage conduit. To this end, the bottom 22 of the discharge channel 4 is provided with an opening 18 connecting to the fluid coupling 12. In operation, the waste scraper brings waste that is on the collecting floor 3 into the discharge channel 4. When progressing in the direction of the discharge channel 4, the waste scraper 5 advanced the waste. When the waste scraper approaches one of the openings 18, a control system can activate the waste suction system to bring the waste in the waste drainage conduit and transport the waste in the waste drainage conduit. As mentioned before, other transportation devices are possible, like mechanic transportation devices in the waste drainage conduit. An example is a worm transport screw.

In an alternative embodiment, not depicted, the discharge channel 4 may be used for collecting urine, and the thicker fraction may be moved using the waste scraper. The waste scraper in such an embodiment is provided for displacing the waste to an end of the collecting floor near an end of the discharge channel. There, a further discharge channel for the thick fraction may be provided. That further channel can be cross with respect to the discharge channel. In an embodiment, it is separate from that discharge channel, i.e., urine and the thicker fraction do not contact. Furthermore, a thick fraction removal device can be provided. This may also be a suction device. It can also be a mechanical displacement device. This separation makes removal of the urine easier.

In order to displace the waste in the discharge channel, the waste scraper 5 can be provided with a lip 17 that matches the cross section of the discharge channel 4. The edges of such a lip 17 can comprise flexible, rubbery strips to function like a wiper. Lip 17 can be at a forward angle with respect to a normal direction of the discharge channel bottom 22 to assist in inserting waste in the fluid coupling 12. Furthermore, water added by the waste flush conduit can further assist in removal of waste. Once the waste in in the waste drainage conduit, it effectively is hermetically and fluidly sealed from the interior of the stable. In figures 1 and 2, the waste drainage conduit 12 schematically debouches in a space 19. In practise, however, the waste will be transported to a coupled biodigester for producing natural gas.

In figure 3, it is depicted how the lower edge 27 of the waste scraper 5 contacts the upper, waste receiving surface 26 of the collecting floor 3.

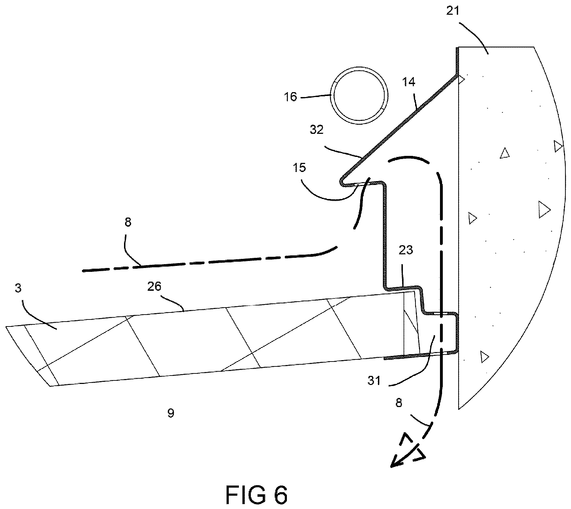

In figure 6, an embodiment is depicted where in fact an integration of the ventilation system and the waste removal system becomes clear. Figure 6 shows a cross sectional detail indicated in figure 3. A profile section 14 is shown in cross section. The profile section 14 is fixed to the side wall 21. Section profile 14 comprises a collecting floor coupling end 23. In this collecting floor coupling end 23, it holds the collecting floor in a liquid-tight manner in order to prevent waste and pests from getting below the collecting floor 3. Furthermore, it provides a lower opening for ventilation air 30. The collecting floor coupling end 23 here holds an edge of the collecting floor remote from the wall 21. Furthermore, through holes in the profile material allows air to pass. The profile is provided with a nose 32 (in cross section) with an opening at a distance from the collecting surface of the collecting floor 3. The nose 32 provides a surface facing the collecting surface 26. A path of air is indicated with reference number 8. In this way, air is drawn though the opening 15 as indicated.

Furthermore, the waste flush conduit 16 is positioned above the profile 14 and above the nose 31. In this way, nozzles in the waste flush conduit 16 can spray the surface 26 of the collecting floor 3 and the water does not directly get into opening 15 and below the collecting floor 3. The slope of the surface 26 of the collecting floor 3 helps in this. In the depicted embodiment, the profile section 14 can be made by bending sheet material for instance on shears or press brakes. The depicted embodiment can easily be installed in existing stables, for renovation and updating the ventilation system and waste removal system in one go.

The stable further comprises a control system 40. Functionally coupled to the controller are one or more sensors for determining air quality, in particular for detecting a level of gases like ammonia (NH3), carbon dioxide (CO2), hydrogen sulphide (H2S), methane (CH4), hydrogen cyanide (HCN), ozone, and a combination thereof. Alternatively or in combination, a sensor can be provided to determine a level of desired gasses, like oxygen. The sensor con also be suited for detection of levels of particles and dust. In the drawing, schematically one detector 41 is indicated. In practise, usually a series of sensor is installed at different locations as well as at different heights. Usually, one or more sensors are installed between 0.5 and 2 meter, depending on the size of the animals.

Based on a level detected by the one or more sensors 41, the control system activates the ventilation system 7 and/or the waste removal system 6. The control system 40 can also depending on a sensed level modify an flow rate of the ventilation system 7 and/or of the waste removal system 6.

The control system is further functionally coupled to the waste scraper 5. The control system is further functionally coupled to the waste flush conduit. For instance depending on the position of the waste scraper 5, the control system 40 can activate past of the flush conduit of part or selected spray nozzles of the waste flush conduit 16.

In figure 7, an alternative embodiment of the waste removal system is depicted. In this embodiment, it may even integrate part of the ventilation system. In this embodiment, the waste scraper 5 includes a hood 28. Here, the hood extends over a width of the collecting floor 3. Lower rims of the hood 28 are close to the collecting floor surface. In an alternative embodiment, a small hood fitting in the discharge channel 4 can be provided.

The hood 28 is fluidly coupled to a flexible conduit 29, here a flexible hose 29. The flexible conduit 29 is here provided on an automatic line reel or winder or reeling drum 30. The waste scraper 5 with hood 28 in operation runs back and forth along a length of the collecting floor 3. The flexible conduit 29 is fluidly coupled with the waste suction device. In operation, air and waste are sucked from the collecting floor 3. In this embodiment, in fact the flexible conduit provides a waste drainage conduit between the walk-on floor 2 and the collecting floor 3. The flexible hose 29 can provide an alternative waste drainage conduit. It may extend in the discharge channel. In an alternative, it may provide a reduced pressure in the hood 28, for removing gasses or even waste from the collecting floor 3.

The waste scraper 5 further comprises an actuator for displacing the waste scraper 5 back and forth along a length of the collecting floor 3. The waste scraper 5 can have one or two opposite waste displacement surfaces. The waste displacement surfaces depicted are planar. In an embodiment, in order to displace waste effectively to the discharge channel 4, the waste displacement surface can be angled, having its center at the discharge channel. Thus, the displacement surface has two displacement surface parts angled towards the discharge channel 4.

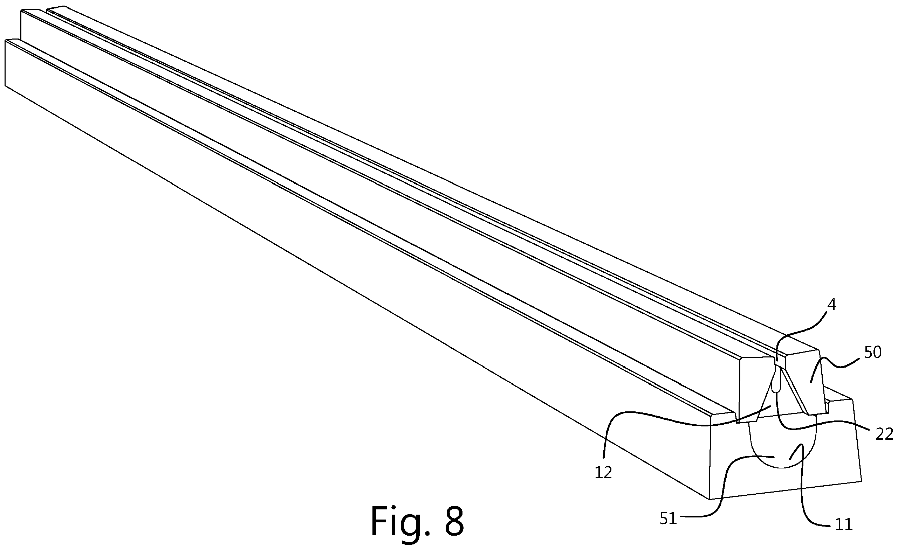

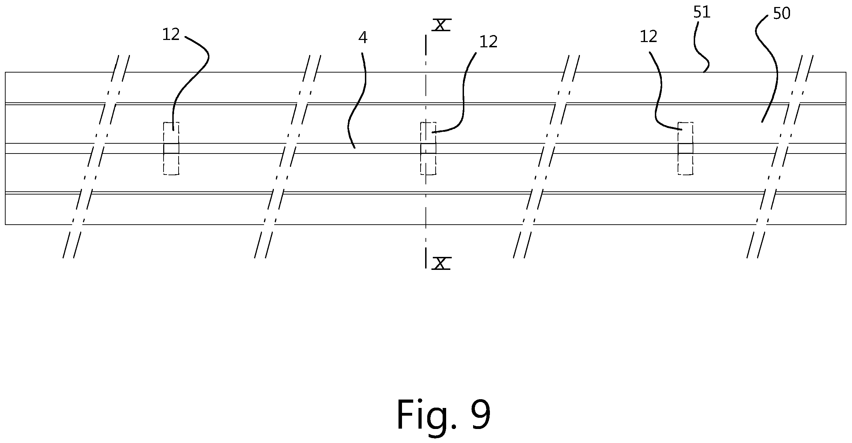

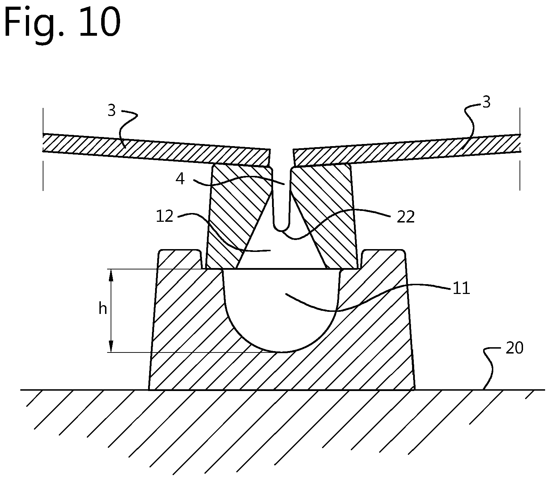

Figure 8 shows a perspective view of a waste drainage system suitable for a stable as described above, figure 9 shows a view from above, and figure 10 a cross section as indicated. In particular, the drainage system prevents gaseous compounds from leaving the drainage system as much as possible. Furthermore, the presented drainage system makes construction of the stable much simpler. It can provide a support for the collecting floor 3 and does not require additional mounting on the cellar floor 20 or waste drainage frame 3. The waste collecting floor 3 of figure 10 can comprise a concrete floor element, in particular a plate. Such a relatively this concrete slab can be impregnated on the waste-receiving side for making the dung slider slide easier. It also prevents the waste from harming the concrete.

The waste drainage system comprises a discharge channel 4 extending in a longitudinal direction. It further comprises a waste drainage conduit 11 also extending in longitudinal direction, in particular below and parallel to the discharge channel 4.

The waste drainage system can be largely made as one single piece. In the current embodiment, there is provided a top part 50 comprising the discharge channel 4, and a bottom part 51 comprising the waste drainage conduit 11.

In this embodiment, the top part 50 furthermore comprises spaced apart fluid couplings 12. In the current embodiment, the fluid couplings 12 are spaced apart about 1.5-2.5 meters. Currently, the fluid couplings 12 are regularly spaced. In an embodiment regularly spaces around 1.8-2.3 meter apart. The fluid couplings 12 are here transverse slots intersecting the discharge channel and debouch into the waste discharge conduit 11. Here, to prevent clogging as much as possible, the fluid couplings 12 funnel out or fan out transversely from the bottom of the discharge channel 4 into the waste discharge conduit 11. In longitudinal direction of the discharge channel 4 extend of has a width of around 2-10 cm. This makes a gassing surface of only 2-10 cm times a width of the discharge channel 4 each 1.5-2.5 meters. In an embodiment, the waste drainage system is produced in for instance 1.5-2.5 meter long parts. At an end of such a part, the fluid coupling 12 is provided at one end, for instance as an indent of about 1-10 cm deep. When assembling the waste drainage system, the parts are head-to-tail positioned, providing a continuous channel and continuous conduit, and a fluid coupling 12 between the (upper) discharge channel 4 and waste drainage conduit 11, here for instance at each 1.5-2.5 meters.

In practise, the discharge channel 4 has a width (transvers direction) of between 1.5-5 cm. In most practical cases, the width is between 1.5-2.5 cm. The waste scraper lip 17 can run through the discharge channel 4 to keep it clean. In fact, the lip 17 can be flexible and at its end can reach into fluid couplings 12 when pulled through the discharge channel 4, thus freeing the fluid couplings 12 from obstruction, when present. The discharge channel 4 will collect largely liquid fraction, mostly urine. Faeces will mostly be removed by the scraper or dung slider 5 over the collecting floor to the end and disposed into the solid fraction of faeces waste container separate from the waste container for the urine of liquid fraction 19.

The top part 50 and bottom past 51 can be made from a mouldable, setting composition. In many cases, concrete can be used. The surfaces that get exposed to urine can be coated using a polymer coating, for instance an epoxy of a known polymer coating resistant to urine.

The bottom part 51 here has a flat bottom for resting stably on a cellar floor 20 as indicated in figure 10. The upper end or the bottom part has two recesses or recessed ledges parallel to the waste discharge channel 11 for keeping the top part 50 stable and in position.

In the depicted embodiment, the waste discharge conduit 11 is provided at an upper end or the bottom part 51. The lower surface of the top part 50 when placed on the bottom part provides a closure for the waste discharge conduit 11. The top part 50 has the slit-shaped discharge channel 4 in its upper end. At both sides of the slit-shaped discharge channel 4, a support surface is provides for supporting sides of the collecting floor 3. This is such that liquid fraction is allowed to flow over the side and into the discharge channel 4. At an end of the waste discharge conduit 11, a waste container 19 is coupled for receiving waste from the waste discharge conduit 11. Furthermore, the contents of the waste discharge conduit 11 can be removed using reduced pressure. To that end, a pump can be provided. In an alternative embodiment, an end of the waste discharge conduit 11 can be provided with a closure. The waste discharge conduit 11 is allowed to fill, for instance until the complete waste discharge conduit 11 is filled. In the drawings, for instance up to the lower end of the top part 50. When opening the closure, waste will flow from the waste discharge conduit, and a resulting reduced pressure in the waste discharge conduit 11 will also suck any contents from the discharge channel 4 and from the fluid couplings 12.

In a simple embodiment, the space between the floor 20 and collecting floor 3 may be filled up with for instance sand.

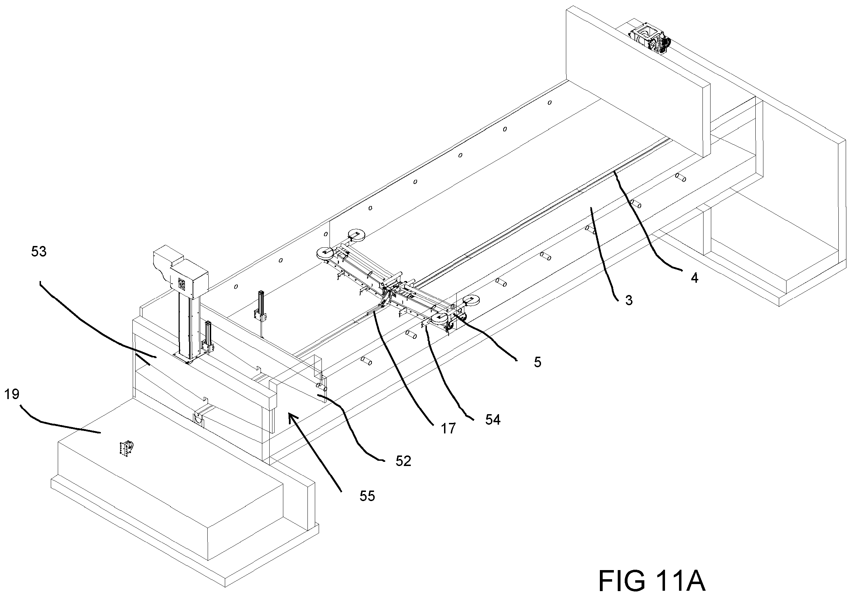

Figures 11A-11E shows a stable comprising a waste-lock, in particular showing several steps in the operation of the waste-lock.

In the current stable concept, the ventilation system provides a flow of air going from the walk-on floor where the animals stand downwards to the (waste) collecting floor. This keeps any ammonia that may remain, as well as other unwanted gasses away from the animals and prevent emission to the outside world. This, however, poses a problem for getting rid of the (solid) waste. In figure 11A, the solid waste is indicated on the collecting floor 3. The dung slider 5 slides over the collecting floor 3 and pushes the solid waste to the waste container 9 at the end of the stable section. The current stable comprises a waste-lock 55 between the collecting floor 3 and the waste container 19. This provides a waste-lock 55 that limits, in particular prevents, gasses to flow between the waste container 19 and the rest of the stable, effectively providing an air lock. Such a waste-lock 55 comprises a passage for waste, which at both ends of the passage is closed by a closure. The closures can be operated by an actuator. In an embodiment, the actuator is controlled by a or the controller. The actuator is adapted to operate the closures in such a way that always one of the closures closes off an end of the waste passage.

The solid waste fraction is transported through the waste passage from the collecting floor 3 to the waste container 19 by the waste removal system. This may be a transporter, conveyor, or the like. In the current embodiment, a waste collecting floor 3 and the manure scraper of dung slider 5 form part of the waste removal system. The collecting floor 3 is slanted towards a discharge channel 4 in order to allow the liquid fraction, mainly urine, to flow into the discharge channel 4 and into the waste discharge conduit 11.

The waste passage has a longitudinal axis. The waste passage is in most embodiments bound by walls, or, in case of a circular cross section, a single circumferential wall. One of the walls defining the waste passage can be a continuation of the collecting floor 3. In the embodiment of figures 11A-11E, the closures are a stable side lock door 52 and a waste container side lock door 53.

In figure 11A, both the stable side lock door 52 and the waste container side lock door 53 are closed, closing off the waste passage. The dung slider 5 moves towards the waste-lock 55, pushing the waste towards the waste container 19. The dung slider 5 is as described in for instance EP3289859 of the applicant. It comprised dividers or fingers 54 as described in that application, and for instance the waste scraper lip 17.

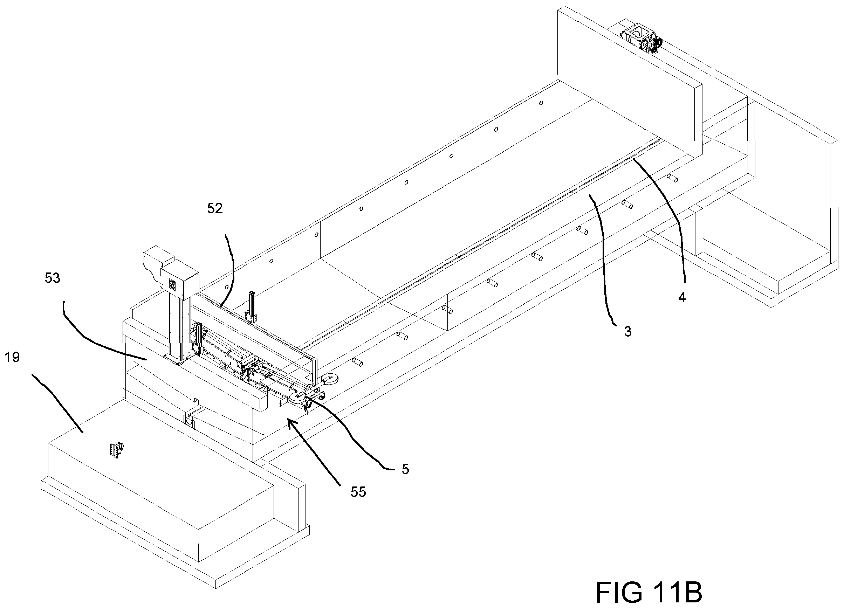

As the dung slider 5 approaches the waste-lock 55, first the stable side lock door 52 opens, as shown in figure 11B. The dung slider 5 is actuated in thus embodiment via cables or chains that run through the discharge channel 4, which thus has an additional function.

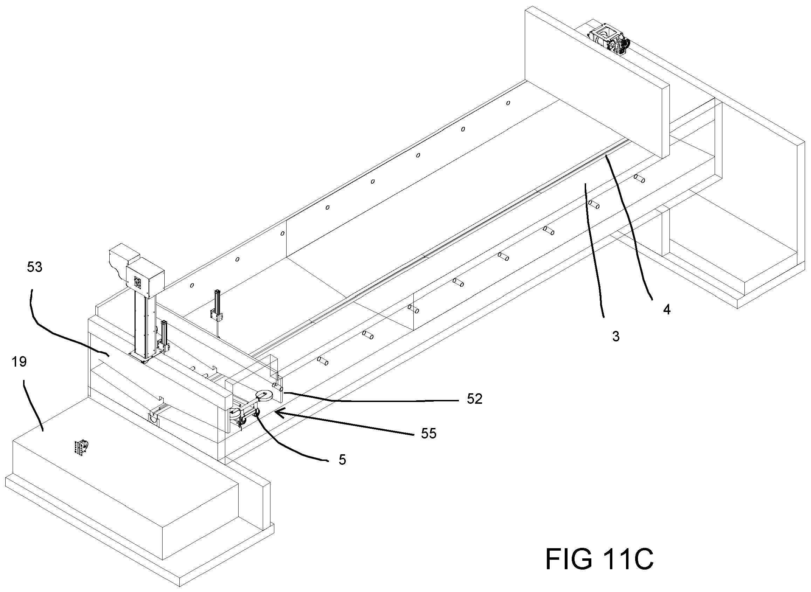

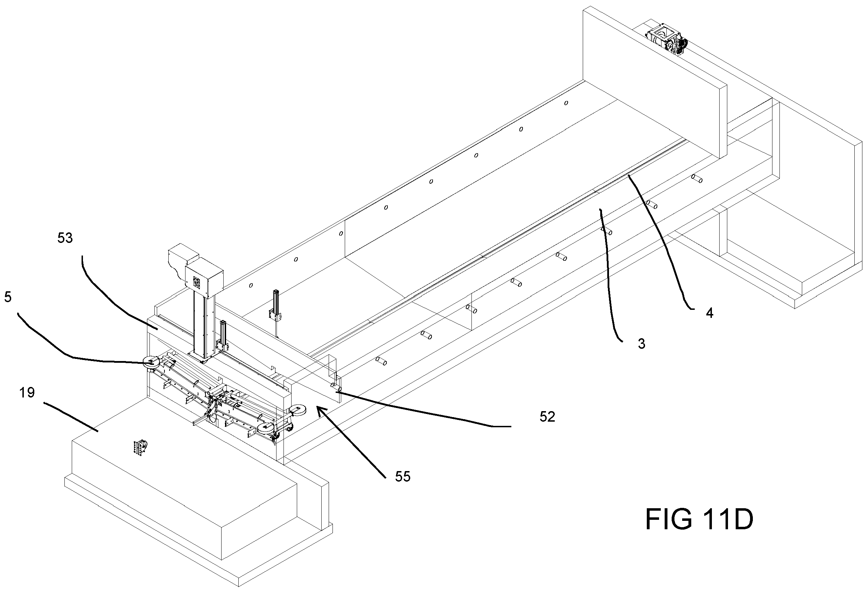

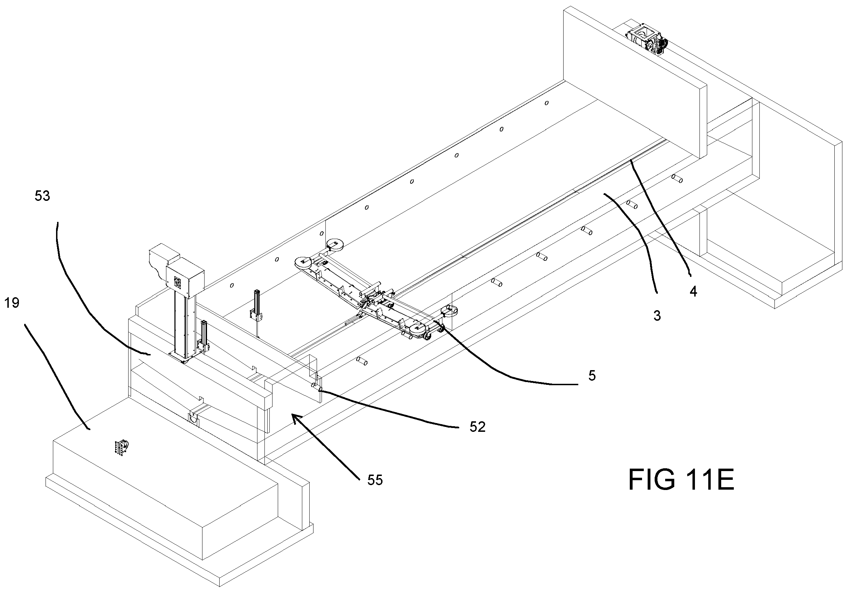

In figure 11C, the dung slider 5 almost completely passed the stable side lock door 52. When it completely passes the stable side lock door 52, that lock door 52 closes. The dung slider 5 is now completely in the waste-lock 55, with both lock doors closed. Next, the waste container side lock door 53 opens. The stable side lock door 52 remains closed. Figure 11D shows how the waste container side lock door 53 is completely open and the dung slider 5 (in fact, the waste) passes the waste container side lock door 53 and deposits the waste it pushed into the waste container 19 that directly sides the waste passage. The width of the waste-lock 55 is at least a length of the dung slider 5, to make it fit into the waste-lock 55, between the two lock doors 52 and 53. In figure 11E, it is depicted how the dung slider 5 is rotated to be free from the collecting floor 3 as it slides back to the opposite end of the collecting floor 3 to start the cycle again.

The stable of figures 11A-11B has an end wall between the collecting floor 3 and the waste container 19. The walk-on floor 2 ends before or at the stable side lock door 52. Thus, the waste-lock 55 is provided between the walk-on floor 2 and the waste container 19. The collecting floor 3 here continues in the waste lock. It provides a in fact an air-lock between the animal part of the stable 1 and the waste container 19. As the waste container 19 is also closed, emission of gasses is reduced.

The collecting floor 3 in the current embodiment comprises a waste drainage 4 defining a longitudinal direction of the collecting floor 3. The waste drainage 4 is here substantially in the center of the collecting floor. At each side, the collecting floor 3 is slanted towards the waste drainage 4. The waste container 19 is provided at a longitudinal end of the collecting floor 3. The waste-lock 55 is between the collecting floor 3 and the waste container 19.

It will also be clear that the above description and drawings are included to illustrate some embodiments of the invention, and not to limit the scope of protection as defined in the appended claims.

Starting from this disclosure, many more embodiments will be evident to a skilled person. These embodiments are within the scope of protection, as defined in the appended claims, and the essence of this invention and are obvious combinations of prior art techniques and the disclosure of this patent.

### Reference Numbers

1 stable
2 walk-on floor
3 collecting floor
4 discharge channel
5 waste scraper or dung slider
6 waste removal system
7 ventilation system
8 air flow
9 cellar
10 air conduit
11 waste drainage conduit
12 fluid coupling - for coupling the waste drainage conduit to the discharge channel
13 waste drainage frame
14 collecting floor support profile
15 inlet opening of the ventilation system
16 waste flush conduit
17 waste scraper lip
18 discharge channel outlet opening
19 waste container
20 cellar floor
21 cellar wall
22 discharge channel bottom
23 collecting floor holding part
26 collecting floor waste receiving surface
27 lower edge of waste scraper
28 hood
29 flexible conduit
30 flexible conduit reel
31 collecting floor edge clamp
32 nose
33 waste transport device/ waste suction device
34 reduced pressure system
40 controller
41 sensor
50 top part (of the waste drainage system)
51 bottom part (of the waste drainage system)
52 stable side lock door
53 waste container side lock door
54 waste scraper fingers
55 waste-lock
h waste drainage conduit height

## Claims

1. A stable (1) comprising
- a walk-on floor (2) for carrying animals and provided with passages for waste, the waste comprising a solid waste fraction mainly comprising manure and a liquid waste fraction mainly comprising urine;
- a collecting floor (3) below the walk-on floor (2) with a top surface for receiving said waste;
- a waste removal system (6) comprising a waste displacer comprising a waste scraper (5) for displacing the solid waste fraction from the collecting floor into a waste container (19), **characterized in that** the stable further comprises
- a waste-lock (55) between the collecting floor (3) and the waste container (19) and comprising a closable waste passage having spaced apart closures for closing off ends of the passage for reducing, in particular preventing, flow of gasses between the waste container and the further stable, in particular for reducing flow of gasses from the waste container (19) to the collecting floor (3) and to the animals,
wherein the closable waste passage comprises a stable side closure and a waste container side closure, wherein the stable side closure is a stable side lock door (52) and the waste container side closure is a waste container side lock door (53), said closures arranged to close of the closable waste passage between the collecting floor and the waste container,
wherein the stable side lock door (52) and the waste container side lock door (53) are spaced apart for holding the waste scraper (5) between them when both lock doors (52, 53) are closed.

2. The stable of claim 1, wherein the lock doors each closing off a passage opening, wherein the lock doors comprise a lock door actuator for opening said passage for allowing the solid waste fraction to pass the lock doors, said lock door actuator adapted, in particular controlled through a control system, for opening and keeping open the stable side lock door until the solid waste fraction passed the stable side lock door, then closing the stable side lock door, opening the waste container side lock door when the stable side lock door is closed, allowing the solid waste fraction to pass the waste container side lock door and be deposited by the waste displacer into the waste container, and closing the waste container side lock door when the solid waste fraction is deposited in the waste container.

3. The stable of claim 2, wherein after closing the waste container side lock door after the solid waste fraction is deposited in the waste container, the actuator is further adapted for opening the stable side lock door and keep it open until the waste displacer passed the stable side lock door, and subsequently closing the stable side lock door.

4. A method for removing waste from a collecting floor into a waste container in a stable of any one of the preceding claims, the method comprising providing a waste-lock, displacing waste via the waste removal system to the waste-lock, opening a waste-lock closure closest to the waste being displaced, displacing the waste via the waste removal system into a waste passage, closing the opened waste-lock closure, opening the opposite waste-lock closure after the opened waste-lock closure is closed, depositing the waste via the waste removal system into the waste container, and closing the opened waste-lock closure.

## Patentansprüche

1. Ein Stall (1) die umfasst
- einen begehbaren Boden (2) zur Beförderung von Tieren, der mit Durchlässen für Abfälle versehen ist, wobei die Abfälle eine feste Abfallfraktion, die hauptsächlich Dung umfasst, und eine flüssige Abfallfraktion, die hauptsächlich Urin umfasst, umfassen;
- einen Sammelboden (3) unterhalb des begehbaren Bodens (2) mit einer Oberseite zur Aufnahme der Abfälle;
- ein Abfallbeseitigungssystem (6), das einen Abfalltransporter zum Transport der festen Abfallfraktion vom Sammelboden in einen Abfallbehälter umfasst, wobei der Abfalltransporter einen Abfallschieber (5) umfasst,
**dadurch gekennzeichnet, dass** der Stall ferner umfasst
- eine Abfallschleuse (55) zwischen dem Sammelboden (3) und dem Abfallbehälter (19), die einen verschließbaren Abfalldurchlass mit beabstandeten Verschlüssen zum Verschließen von Enden des Durchlasses aufweist, um einen Gasfluss zwischen dem Abfallbehälter und dem weiteren Stall zu reduzieren, insbesondere zu verhindern, insbesondere um einen Gasfluss vom Abfallbehälter (19) zum Sammelboden (3) und zu den Tieren zu reduzieren,
wobei der verschließbare Abfalldurchgang einen stallseitigen Verschluss und einen abfallbehälterseitigen Verschluss umfasst, wobei der stallseitige Verschluss eine stallseitige Schleusentür (52) und der abfallbehälterseitige Verschluss eine abfallbehälterseitige Schleusentür (53) ist,
wobei die Verschlüsse einen Abfalldurchgang zwischen dem Sammelboden und dem Abfallbehälter verschließen,
wobei die stallseitige Schleusentür (52) und die abfallbehälterseitige Schleusentür (53) voneinander beabstandet sind, um den Abfallkratzer dazwischen zu halten, wenn beide Schleusentüren (52, 53) geschlossen sind.

2. Der Stall nach Anspruch 1, wobei die Schleusentüren jeweils eine Durchgangsöffnung verschließen, wobei die Schleusentüren einen Schleusentüraktuator zum Öffnen des Durchgangs umfassen, um es der festen Abfallfraktion zu ermöglichen, die Schleusentüren zu passieren, wobei der Schleusentüraktuator angepasst ist, insbesondere durch ein Steuersystem gesteuert wird, um die stabilseitige Schleusentür zu öffnen und offen zu halten, bis die feste Abfallfraktion die stabilseitige Schleusentür passiert hat, dann Schließen der stabilen seitlichen Schleusentür, Öffnen der abfallbehälterseitigen Schleusentür, wenn die stabile seitliche Schleusentür geschlossen ist, Ermöglichen, dass die feste Abfallfraktion die abfallbehälterseitige Schleusentür passiert und durch den Abfalltransporter in den Abfallbehälter deponiert wird, und Schließen der abfallbehälterseitigen Schleusentür, wenn die feste Abfallfraktion in dem Abfallbehälter deponiert ist.

3. Der Stall nach Anspruch 2, wobei der Aktuator nach dem Schließen der seitlichen Verschlusstür des Abfallbehälters, nachdem die feste Abfallfraktion in den Abfallbehälter eingebracht wurde, ferner dazu ausgelegt ist, die seitliche Verschlusstür des Stalls zu öffnen und offen zu halten, bis der Abfalltransporter die seitliche Verschlusstür des Stalls passiert hat, und anschließend die seitliche Verschlusstür des Stalls zu schließen.

4. Ein Verfahren zum Entfernen von Abfall von einem Sammelboden in einen Abfallbehälter in einem Stall nach einem der vorhergehenden Ansprüche, wobei das Verfahren das Bereitstellen einer Abfallschleuse, das transportieren von Abfall über das Abfallentfernungssystem zu der Abfallschleuse, das Öffnen eines Abfallschleusenverschlusses, der dem zu verschiebenden Abfall am nächsten ist, das Verschieben des Abfalls über das Abfallentfernungssystem in einen Abfalldurchgang, das Schließen des geöffneten Abfallschleusenverschlusses, das Öffnen des gegenüberliegenden Abfallschleusenverschlusses, nachdem der geöffnete Abfallschleusenverschluss geschlossen ist, das Ablegen des Abfalls über das Abfallentfernungssystem in den Abfallbehälter und das Schließen des geöffneten Abfallschleusenverschlusses umfasst.

## Revendications

1. Une étable (1) comprenant
- un plancher de passage (2) praticable pour le transport des animaux et pourvu de passages pour les déchets, les déchets comprenant une fraction solide comprenant principalement du fumier et une fraction liquide comprenant principalement de l'urine;
- un plancher collecteur (3) situé sous le plancher de passage (2) et doté d'une surface supérieure destinée à recevoir lesdits déchets;
- un système d'élimination des déchets (6) comprenant un déplaceur de déchets comprenant un racleur de déchets (5) pour déplacer la fraction de déchets solides du plancher de collecte dans un conteneur à déchets (19), le déplaceur de déchets,
**caractérisé en ce que** l'étable comprend en outre
- un verrouillage à déchets (55) entre le plancher collecteur (3) et le conteneur à déchets (19) et comprenant
un passage à déchets fermable, avec des fermetures espacées pour fermer les extrémités du passage afin de réduire, en particulier d'empêcher, le flux de gaz entre le conteneur à déchets et l'autre étable, en particulier pour réduire le flux de gaz du conteneur à déchets (19) vers le plancher collecteur (3) et vers les animaux,
Dans lequel le passage à déchets fermable comprend une fermeture du côté de l'étable et une fermeture du côté du conteneur à déchets, la fermeture du côté de l'étable étant une porte de verrouillage du côté de l'étable (52) et la fermeture du côté du conteneur à déchets étant une porte de verrouillage du côté du conteneur à déchets (53),
les fermetures placé ferment un passage de déchets entre le plancher de collecteur et le conteneur de déchets,
la porte de fermeture du côté étable (52) et la porte de fermeture du côté du conteneur à déchets (53) sont espacées pour maintenir le racleur de déchets (5) entre elles lorsque les deux portes de fermeture (52, 53) sont fermées.

2. L'étable de la revendication 1, dans laquelle les portes de verrouillage ferment chacune une ouverture de passage, dans laquelle les portes de verrouillage comprennent un actionneur de porte de verrouillage pour ouvrir ledit passage afin de permettre à la fraction de déchets solides de passer les portes de verrouillage, ledit actionneur de porte de verrouillage étant adapté, en particulier contrôlé par un système de commande, pour ouvrir et maintenir ouverte la porte de verrouillage du côté de l'étable jusqu'à ce que la fraction de déchets solides passe la porte de verrouillage du côté de l'étable, fermer ensuite la porte de verrouillage du côté de l'étable, ouvrir la porte de verrouillage du côté du conteneur à déchets lorsque la porte de verrouillage du côté de l'étable est fermée, permettre à la fraction de déchets solides de passer la porte de verrouillage du côté du conteneur à déchets et d'être déposée par le déplaceur de déchets dans le conteneur à déchets, et fermer la porte de verrouillage du côté du conteneur à déchets lorsque la fraction de déchets solides est déposée dans le conteneur à déchets.

3. L'étable de la revendication 2, dans laquelle, après la fermeture de la porte de verrouillage du côté du conteneur à déchets après le dépôt de la fraction de déchets solides dans le conteneur à déchets, l'actionneur est en outre adapté pour ouvrir la porte de verrouillage du côté de l'étable et la maintenir ouverte jusqu'à ce que le déplaceur de déchets a passé la porte de verrouillage du côté de l'étable, puis pour fermer la porte de verrouillage du côté de l'étable.

4. Méthode d'élimination des déchets d'un plancher collecteur dans un conteneur à déchets dans une étable selon l'une des revendications précédentes, la méthode comprenant fournir d'un verrouillage à déchets, déplacer des déchets via le système d'élimination des déchets vers le verrouillage à déchets, ouvrir d'une fermeture de verrouillage à déchets la plus proche des déchets déplacés, déplacer des déchets via le système d'élimination des déchets dans un passage à déchets, fermer de la fermeture de verrouillage à déchets ouverte, ouvrir de la fermeture de verrouillage à déchets opposée après fermer de la fermeture de verrouillage à déchets ouverte, déponer des déchets via le système d'élimination des déchets dans le conteneur à déchets, et fermer de la fermeture de verrouillage à déchets ouverte.
